Europäisches Patentamt

European Patent Office

Office européen des brevets

(11) Veröffentlichungsnummer: **0 359 824**
**A1**

## (12) EUROPÄISCHE PATENTANMELDUNG
### veröffentlicht nach Art. 158 Abs. 3
### EPÜ

(21) Anmeldenummer: 88908412.5

(22) Anmeldetag: 29.03.88

(86) Internationale Anmeldenummer:
PCT/SU88/00073

(87) Internationale Veröffentlichungsnummer:
WO 89/08985 (05.10.89 89/24)

(51) Int. Cl.5: **A23B 4/00 , A22C 25/08**

(43) Veröffentlichungstag der Anmeldung:
28.03.90 Patentblatt 90/13

(84) Benannte Vertragsstaaten:
**DE FR SE**

(71) Anmelder: **GOSUDARSTVENNY PROEKTNO-KONSTRUKTORSKY INSTITUT RYBOPROMYSLOVOGO FLOTA "GIPRORYBFLOT"**
**ul. Gogolya, 18-20**
**Leningrad, 190000(SU)**

(72) Erfinder: **VDOVICHENKO, Vyacheslav Ignatievich**
**ul. Korablestroitelei, 22-1-263**
**Leningrad, 199226(SU)**
Erfinder: **ELAGIN, Vladimir Nikolaevich**
**ul. Nakhimova, 3-1-31**
**Leningrad, 199266(SU)**
Erfinder: **ZHURAVLEV, Alexandr Nikolaevich**
**pr. Kosmonavtov, 52-2-122**
**Leningrad, 196233(SU)**
Erfinder: **SHKARIN, Alexandr Sergeevich**
**ul. Ziny Portnovoi, 17-3-26**
**Leningrad, 198207(SU)**

(74) Vertreter: **Finck, Dieter et al**
**Patentanwälte v. Füner, Ebbinghaus, Finck**
**Mariahilfplatz 2 & 3**
**D-8000 München 90(DE)**

(54) **FLIESZSTRASSE ZUR KONSERVENHERSTELLUNG AUS KLEINEN FISCHEN.**

(57) Die Fließstraße enthält eine Sortiermaschine 3, Puffernälter 7, Scheiben-Fischorientierungsvorrichtungen 9, Schlachtung Einlegemaschinen 11, die mit technologischen Förderern 10 ausgerüstet sind, eine Waage- und Kontrollanlage 40, eine Anlage 42 zur Wärmebehandlung der Fische, eine Spezereiendosiermaschine 43, einen Ölfüller 44, eine Dosenverschlußmaschine 45 und eine Dosenwaschmaschine 46. Die Pufferbehälter 7 sind mit den Fischorientierungsvorrichtungen 9 über Zubringerförderer 8 verbunden, deren Austrittsabschitte 15 gegenüber den Achsen 17 der Förderer 10 versetzt sind. Die Fischoriemtierungsvorrichtungen 9 sind mit den Förderern 10 durch geneigte

Fischrinnen 13, 14 verbunden. Das Verhältnis der Weglängen auf dem Kreisumfang der Scheibe 18 der Fischorientierungsvorrichtung zwischen dem Austrittsabschnitt des Förderers 8 bis zu den Eintrittsabschnitten 21, 22 der geneigten Fischrinnen beträgt 0,9 bis 1,1. Die Austrittsabschnitte 23, 24 der Fischrinnen führen zu den gegenüberliegenden Bordseiten des Förderers 10 und sind senkrecht in bezug auf seine Längsachse orientiert. Der Eintritts- und der Austrittsabschnitt ein und derselben Fischrinne sind gegenüber den entsprechenden Abschnitten der anderen Fischrinne in Richtung der Achse des Förderers 10 versetzt. In der Fließstraße sind Mittel 27 zur Steuerung der Laufgeschwindigkeit der Förderer 8 eingebaut.

FIG.1

2

# FLIESSSTRAßE ZUR KONSERVENHERSTELLUNG
## AUS KLEINEN FISCHEN

## Gebiet der Technik

Die Erfindung betrifft Fließstraßen zur Herstellung von Konserven, bespielsweise von "Ölsardinen" bzw. "Ölsprotten" aus kleinen Fischen, die in rechteckige Dosen in zwei Reihen eingelegt werden, wobei die Fische in der ersten und in der zweiten Reihe in entgegengesetzten Richtungen orientiert sein müssen.

## Vorhergehender Stand der Technik

In der letzten Zeit hat infolge einer gewissen Erschöpfung der kommerziellen Fischvorkommen eine wesentliche Änderung der Fischarten und der Fischgrößen stattgefunden, die zur Konservenherstellung verwendet werden. Der Hauptteil des Fanges besteht jetzt aus kleinen Fischen. Aus diesem Grunde ist das Problem der Verarbeitung kleiner Fische aktuell geworden. Die hauptsächlichen Schwierigkeiten, die bei der Verarbeitung kleiner Fische während der Konservenherstellung in Erscheinung treten, sind dadurch bedingt, daß das geordnete Einlegen der kleinen Fische in die Dosen von Hand eine wesentlich arbeitsaufwendigere Arbeitsverrichtung mit geringerer Arbeitsleistung darstellt, als dasselbe Einlegen größerer Fische in Dosen. Zu den Fischkonserven, die in der ganzen Welt gefragt werden, gehören Fischkonserven des Typs "Ölsardinen" bzw. "Ölsprotten". Die angeführten Konserven werden auf spezialisierten technologischen Linien erzeugt.

Bekannt ist eine Fließstraße zur Erzeugung von Fischkonserven des Typs "Ölsprotten", mit den aufeinanderfolgend in Richtung des technologischen Ablaufs angeordneten : einer Fischwaschmaschine, einer Fischsortiermaschine zur Sortierung nach Größengruppen, einem Einsalzbad, einer Spittmaschine, einem Räucherofen für die Wärmebehandlung der Fische, einer Köpfmaschine zum Abtrennen der Köpfe und Schwänze, Tischen für das Einlegen der Fische von Hand in die Dosen, einer Öleinfüllmaschine, einer Dosenverschlußmaschine und einer Dosenwaschmaschine ("Spravochnik po tekhnologicheskomu oborudovaniju ryboobrabatyvajuschikh proizvodstv", A.A.Romanov und andere, 1979, Band I, Seite 253). Auf dieser Fließstaße werden die auf Spitten aufgereihten Fische in dem Räucherofen geräuchert, worauf die Fische in geräuchertem Zustand von Hand in Dosen eingelegt und zur anschließenden Bearbeitung weitergegeben werden.

Das Einlegen der Fische in die Dosen von Hand in einer solchen Fließstraße bedingt die verhältnismaßig große Arbeitsaufwendigkeit der Konservenherstellung und die verhältnißmäßig niedrige Produktionsleistung der Straße. Dazu kommt, daß, da die Fische in die Dosen nach der Wärmebehandlung im Räucherofen eingelegt werden, eine Mechanisierung des Einlegeprozesses infolge der geringfügigen mechanischen Festigkeit der geräucherten Fische nicht zweckmäßig erscheint, weil sie ein Auseinanderfallen der Fischleiber während des Einlegens verursachen kann.

Es ist ein Fließstraße zur Erzeugung der Fischkonserven des Typs "Ölsardinen" aus kleinen Fischen bekannt, in der die Fische in die Dosen vor der Wärmebehandlung der Fische eingelegt werden.

Die Fließstraße enthält die aufeinanderfolgend in Richtung des Prozeßablaufs angeordneten: eine Auftauanlage, eine Fischsortiermaschine zur Fischsortierung nach den Größengruppen, eine Schlacht- und Einlegenmaschine für jede Fischgrößengruppe, eine Maschine mit einem ihr vorgeschalteten Pufferbehälter, die mit einem technologischen Förderer mit Kassetten für die Fische ausgerüstet ist, eine Waage- und Kontrollanlage, eine Anlage für die Wärmebehandlung der Fische - einen Dämpftunnel, eine Spezereiendosiermaschine, einen Ölfüller, eine Dosenverschlußmaschine und eine Dosenwaschmaschine. ("Spravochnik po tekhnologicheskomu oborudovaniju ryboobrabatyvajuschikh proizvodstv", A.A.Romanov und andere, 1979, Band I, Seite 251).

Beim Betrieb dieser Straße werden die über den Förderer von der Sortiermaschine zu den für jede Fischgrößengruppe separaten Schlacht- und Einlegemaschinen beförderten Fische von Hand in die Kassetten des technologischen Förderers in zwei Reihen gepackt und zur anschließenden Bearbeitung weitergegeben. Die Wärmebehandlung der Fische wird nach dem Umpacken der Fische aus den Kassetten in die Dosen durchgeführt.

Das Packen der Fische in die Kassetten von Hand bedingt ebenso wie bei der vorstehend beschriebenen Analogielösung eine verhältnismäßig hohe Arbeitsaufwendigkeit der Konservenherstellung und eine verhältnismäßig niedrige Produktionsleistung der Straße.

Offenbarung der Erfindung

Die Erfindung liegt die Aufgabe zugrunde, eine Fließstraße zur Herstellung von Konserven aus kleinen Fischen, beispielsweise "Ölsprotten" bzw. "Ölsardinen" zu schaffen, in welcher zwischen der Sortiermaschine und dem technologischen Förderer mit den Kassetten für die Fische jeder der Schlacht- und Einlegemaschinen solche Mittel angeordnet und diese Mittel derart miteinander und mit dem angeführten technologischen Förderer verbunden werden, daß ein mechanisiertes und ununterbrochenes Packen der Fische in jede Kassette in zwei Reihen gewährleistet und somit eine Reduzierung des Arbeitsaufwands für das Packen der Fische in die Kassetten erreicht wird, um auf diese Art und Weise die Arbeitsaufwendigkeit der Produktion zu reduzieren und die Produktionsleistung der Fließstraße zu steigern.

Diese Aufgabe wird ausgehend von einer bekannten Fließstraße zur Erzeugung der Fischkonserven aus kleinen Fischen, beispielsweise "Ölsprotten" bzw. "Ölsardinen", mit den aufeinanderfolgend in Richtung des technologischen Prozesses angeordneten: einer Fischsortiermaschine zur Sortierung der Fische nach Größengruppen, einer Schlacht- und Einlegemachine für jede Fischgrößengruppe mit einem ihr vorgeschalteten Pufferbehälter, die mit einem technologischen Förderer mit Kassetten für die Fische ausgerüstet ist, einer Waage- und Kontrollanlage, einer Anlage für die Wärmebehandlung der Fische, einer Spezereiendosiermaschine, einem Ölfüller, einer Dosenabschlußmaschine und einer Dosenwaschmaschine, erfindungsgemäß dadurch gelöst, daß nach jedem Pufferbehälter vor der Schlacht- und Einlegemaschine eine an sich bekannte Scheiben-Fischorientierungsvorrichtung angeordnet ist, daß der Pufferbehälter mit der Fischorientierungsvorrichtungen über einen Zubringerförderer in Verbindung steht, dessen Ausgangsabschnitt gegenüber der Längsachse des technologischen Förderers versetzt ist, daß jede Fischorientierungsvorrichtung mit dem technologischen Förderer über zwei geneigte Fischrinnen für die Beförderung der Fische in die Kassetten in Verbindung steht, daß der Abstand auf dem Kreisumfang der Scheibe einer jeden Fischorientierungsvorrichtung von dem Austrittsabschnitt des Zubringerförderers bis zum Eintrittsabschnitt einer der geneigten Fischrinnen 0,9 bis 1,1 des Abstands von demselben Austrittsabschnitt des Zubringerförderers bis zum Eintrittsabschnitt der anderen geneigten Fischrinne beträgt, daß die Austrittsabschnitte der angeführten Fischrinnen zu den gegenüberliegenden Bordseiten des technologischen Förderers führen und senkrecht in bezug auf seine Längsachse orientiert sind, und daß der Eintritts- und der Austrittsabschnitt der einen Fischrinne gegenüber den entsprechenden Abschnitten der anderen Fischrinne in der gleichen Richtung in Richtung der Längsachse des technologischen Förderers versetzt sind, wobei in der Fließstraße Mittel zur Steurung der Geschwindigkeit der Zubringerförderer eingebaut sind.

Unter der Scheiben-Fischorientierungsvorrichtung versteht man eine an sich weit bekannte und in der Praktik verwendete Vorrichtung, deren Hauptelement eine die Torsionsschwingungen durchgeführte Horizontalscheibe darstellt und die zur Orientierung der Fische kopfwärts und zum Leiten der orientierten Fische über die genannte Scheibe in zwei Ströme bestimmt ist.

Eine Scheiben-Fischorierungsvorrichtung, die mit dem technologischen Förderer der Schlachtund Einlegemaschine über zwei geneigte Fischrinnen in Verbindung steht, deren Austrittsabschnitte zu den gegenüberliegenden Bordseiten der technologischen Förderers führen und senkrecht in bezug auf seine Längsachse orientiert sind, gewährleistet die mechanisierte Beförderung der in zwei entgegengesetzten Richtungen orientierten Fische auf den technologischen Förderer. Das Verhältnis der Abstände auf dem Scheibenkreisumfang der Fischorientierungsvorrichtung von dem Austrittsabschnitt der Zubringerför-

derers bis zu den Eintrittsabschnitten der geneigten Fischrinnen (Wegelängen, die die Fische auf der Fischorientierungsvorrichtung durchlaufen), das 0,9 bis 1,1 beträgt, ermöglicht eine praktisch gleichmäßige Beförderung orientierter Fische zu diesen geneigten Fischrinnen.

Die Erfinder haben festgestellt, daß bei der Bewegung auf der Fischorientierungsvorrichtung zu jeder der zwei geneigten Fischrinnen die Fische einen Widerstand überwinden, der sowohl durch einzelne Fische, die zufälligerweise in der der Orientierungsrichtung des Hauptfischstroms entgegengesetzter Richtung orientiert sind, als auch durch Fischanhäufungen, die infolge der chaotischen Zusammenstöße der die Orientierungsvorrichtung durchlaufenden Fische entstehen verursacht wird. Diese einzelnen Fische und die Fischanhäufungen können sich in bezug auf den Hauptstrom in entgegengesetzter Richtung zur zweiten geneigten Fischrinne bewegen.

Da mit der Vergrößerung der Länge des Wegs, den die Fische durchlaufen müssen, die Wahrscheinlichkeit wächst, daß sich Fischanhäufungen bilden und diese Fischanhäufungen und einzelne Fische sich in der dem Fischhauptstrom entgegengesetzten Richtung bewegen, führt eine Vergrößerung des Abstands von dem Austrittsabschnitt des Zubringerförderers bis zum Eintrittsabschnitt der geneigten Fischrinne zu einer Reduzierung der Fischmenge, die dieser Fischrinne zugeführt wird.

Die Erfinder haben durch Versuche festgestellt, daß unwesentliche Unterschiede der Abstände zwischen dem Austrittsabschnitt des Zubringerförderers einerseits und den Eintrittsabschnitten der geneigten Fischrinnen andererseits, die innerhalb der oben angeführten Verhältnissen liegen, keinen wesentlichen Einfluß auf die Menge der Fische ausüben, die den Fischrinnen je Zeiteinheit zugeführt werden, da die Faktoren, die die unsachgemäße Orientierung der Fische beeinflussen, einen zufälligen Charakter aufweisen.

Die Versetzung der Austrittsabschnitte der Fischrinnen gegeneinander in Richtung der Achse des technologischen Förderers ermöglicht das aufeinanderfolgende Einlegen zweier Fischreihen in die Kassette und gegebenenfalls die Berichtigung von Hand der Lage einer jeden der Fischreihen in der Kassette. Da die Neigungswinkel beider geneigten Fischrinnen der jeweiligen Orientierungsvorrichtung einander nahe sein müssen, um die praktisch gleiche Bewegungsgeschwindigkeit der Fische in diesen Fischrinnen zu gewährleisten, müssen auch die Eintrittsabschnitts dieser Fischrinnen gegeneinander in Richtung der Versetzung der Austrittsabschnitte versetzt sein. Die Versetzung der Eintrittsabschnitte der geneigten Fischrinnen in Richtung der Achse des technologischen Förderers mit Erfüllung der Bedingung bezüglich des geringfügigen Unterschieds der Abstände zwischen dem Austrittsabschnitt des Zubringerförderers einerseits und den Eintrittsabschnitten der geneigten Fischrinnen andererseits kann nur bei der Versetzung des Austrittsabschnitts des Zubringerförderers bezüglich der Achse des technologischen Förderers durchgeführt werden.

Die Gewährleistung der oben angeführten mechanisierten Beschickung des technologischen Förderers mit gleichen Mengen in zwei entgegengesetzten Richtungen orientierter Fische und der Möglichkeit für die gegebenenfalls erforderliche Berichtigung von Hand der Lage jeder der Fischreihen in der Kassette ermöglicht es, das mechanisierte Einlegen der Fische in jede Kassette in zwei Reihen durchzuführen und somit die Arbeitsaufwände für das Einlegen der Fische in die Kassetten zu reduzieren, d.h. die Arbeitsaufwendigkeit der Konservenherstellung herabzusetzen und die Produktionsleistung der Fließstraße zu erhöhen.

Das Vorhandensein der Mittel zur Steuerung der Geschwindigkeit der Zubringerförderer in der Straße bietet die Möglichkeit, beim Einstehen zufälliger Abweichungen der Fischmengen, die aus den geneigten Fischrinnen in die Kassetten gegeben werden, diese Abweichungen durch eine Änderung der Fischmenge zu kompensieren, die den Fischorintierungsvorrichtungen zugeführt wird, d.h. durch Änderung der Laufgeschwindigkeit der Zubringerförderer. Die angeführten zufälligen Abweichungen der Fischmengen, die in die Kassetten gegeben werden, können durch verschiedene Einflüsse verursacht sein, beispielsweise durch Änderung der Fischgröße innerhalb einer Fischgrößengruppe. Die Möglichkeit für den Ausgleich der oben angeführten Abweichungen der Fischmengen, die in die Kassetten gegeben werden, gestattet es, praktisch die untergebrochene Füllung sämtlicher Kassetten mit der erforderlichen Fischmenge zu gewährleisten, was eine obligatorische Bedingung für das qualitative Einlegen der Fische in die Kassetten ist.

Es ist zweckmäßig, daß die Mittel zur Steuerung der Laufgeschwindigkeit der Zubringerförderer an den Schlacht- und Einlegemaschinen angeordnet sind.

Die Installation der Mittel zur Steuerung der Laufgeschwindigkeit der Zubringerförderer an den Schlacht- und Einlegemaschinen gestattet, daß die Änderung der Laufgeschwindigkeit der Zubringerförderer von den Operatoren durchgeführt wird, die die Berichtigung der Lage der Fische in den Kassetten von Hand ausführen und die Abweichungen der Fischmengen, die in die Kassetten gegeben werden, überwachen können.

Kurze Beschreibung der Zeichnungen

Die oben angeführten Vorteile und die Merkmale der Erfindung werden anhand einer ausführlichen Beschreibung einer bevorzugten Ausführungsvariante der Erfindung mit Bezugnahme auf Zeichnungen erläutert. Es zeigt

Fig.1 ein Schema der erfindungsgemäßen Fließstraße und

Fig.2 eine Einzelheit 1 in Fig.1 im vergrößerten Maßstab.

Beste Ausführungsvariante der Erfindung

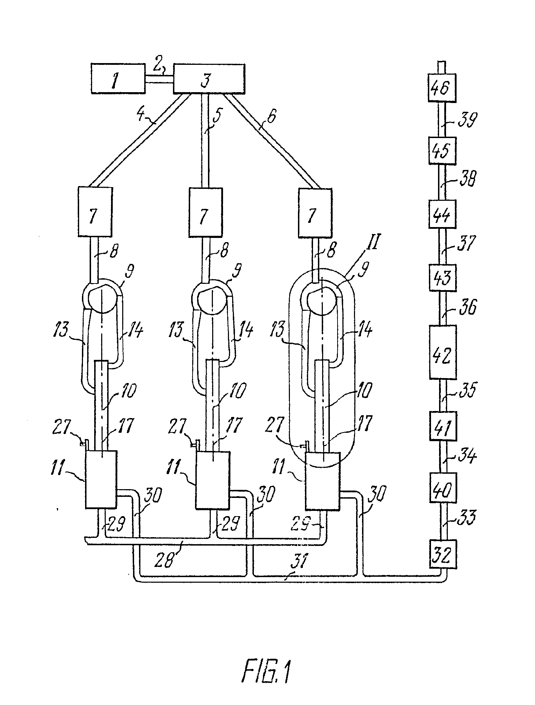

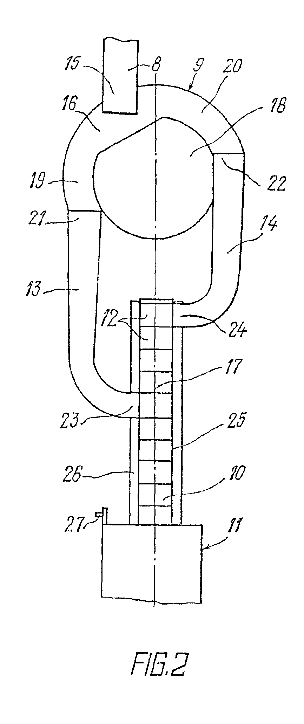

Die Fließstraße umfaßt eine Auftauanlage 1 (Fig.1), die mittels eines Förderers 2 mit einer Fischsortiermaschine 3 in Verbindung steht. In den Fällen, wenn die Fließstraße nur für die Verarbeitung frischer Fische ausgelegt ist, kann anstatt der Auftauanlage eine Fischwaschmaschine angeordnet werden. Von der Fischsortiermaschine 3 gehen Förderer 4, 5, 6 für verschiedene abgesonderte Fischgrößengruppen ab. Die Förderer 4, 5, 6 stehen mit Pufferbehältern 7 in Verbindung, letztere sind über Zubringerförderer 8 mit Scheiben-Fischorientierungvorrichtungen 9 verbunden, die ihrerseits mit den technologischen Förderern 10 von Schlacht- und Einlegemaschinen 11 in Verbindung stehen, welche Kassetten 12 (Fig.2) für die Fische aufweisen, wobei die Verbindung über geneigte Fischrinnen 13, 14 für die Beschickung der angeführten Kassetten mit Fisch erfolgt. Um ein besseres Einlegen der Fische in die Kassetten zu erreichen, kann die Breite der Fischrinnen 13, 14 gleich der Breite der Kassetten 12 gewählt werden.

Die Scheiben-Fischorientierungsvorrichtungen können einen Aufbau aufweisen, der beispielsweise im Urheberschein der UdSSR Nr.1294325 beschrieben ist. Der Austrittsabschnitt 15 eines jeden Zubringerförderers 8 ist unmittelbar über der Beladebühne 16 der mit ihm in Verbindung stehenden Fisch-Orientierungsvorrichtung 9 angeordnet und gegenüber der Längsachse 17 des technologischen Förderers 10 versetzt.

Auf der Scheibe 18 der Fisch-Orientierungsvorrichtung 9 sind zwei Rinnen 19, 20 angeordnet, welche kreisbogenförmig ausgebildet sind und die Beladebühne 16 mit dem Eintrittsabschnitt 12 der Rinne 13 bzw. mit dem Eintrittsabschnitt 22 der Rinne 14 verbinden. Das Verhältnis der Längen der Rinnen 19 und 20 kann in den Grenzen von 0,9 bis 1,1 variieren. Die Fischrinnen 13 und 14 weisen einander nahe Neigungswinkel auf. Die Neigungswinkel der Fischrinnen 13, 14 werden derart gewählt, daß solche Bewegungsgeschwindigkeiten der Fische in diesen Rinnen gewährleistet werden, die ein normales Einlegen der Fische in die Kassetten 12 sichern, d.h. daß die Fische einerseits nicht aus den Kassetten infolge der übergroßen Zufuhrgeschwindigkeit herausgleiten, und andererseits auf der vollen Länge in die Kassetten hineingleiten.

Die Austrittsabschnitte 23, 24 der Fischrinnen 13, bzw. 14 sind an die gegenüberliegenden Bordseiten 25, 26 des technologischen Förderers 10 herangeführt und in Richtung senkrecht zu seiner Längsachse 17 orientiert. Der Eintrittsabschnitt 21 und der Austrittsabschnitt 23 der Fischrinne 13 sind gegenüber den entsprechenden Abschnitten 22, 24 der Fischrinne 14 in Richtung der Achse 17 des technologischen Förderers 10 in Abstand zwischen den Austrittsabschnitten 23 und 24 der Fischrinnen wird derart gewählt, daß eine Berichtigung der Lage der aus der Fischrinne 14 kommenden Fische von Hand möglich ist. Der angegebene Abstand wird ausgehend von der vorgegeben durchschnittlichen Arbeitsgeschwindigkeit des technologischen Förderers 10 gewählt und wird bei größeren durchschnittlichen Arbeitsgeschwindigkeiten größer angesetzt. Die Versetzung der Eintrittsabschnitte 21 und 22 der Fischrinnen 13 und 14 gegeneinander in Richtung der Achse 17 des technologischen Forderers 10 ist durch Versetzung gegeneinander der Austrittsabschnitte 23 und 24 dieser Fischrinnen bedingt. Die Größe der oben angeführten Versetzung des Austrittsabschnitts 15 des Zubringerförderers 8 gegenüber der Achse 17 des technologischen Förderers 10 wird durch das Verhältnis der Längen der Rinnen 19 und 20 und der Größe der gegenseitigen Versetzung der Eintrittsabschnitte 21 und 22 der Fischrinnen 13 und 14 in Richtung der Achse 17 bestimmt.

An jeder Schlacht- und Einlegemaschine 11 ist ein Mittel 27 zur Steuerung der Laufgeschwindigkeiten des mit ihr in Verbindung stehenden Zubringerförderers 8 angeordnet, das beispielsweise als Handsteuerpult für die Geschwindigkeiten des Antriebs des Antriebskettenrads des Zubringerförderers 8 ausgebildet ist (der Antrieb und das Antriebskettenrad sind in den Figuren nicht eingezeichnet, um die Zeichnungen nicht zu komplizieren). Die Anordnung des Steuerungsmittels 27 ist auch an einem anderen Ort möglich, beispielsweise unmittelbar am Zubringerförderer 8.

An den Austrittsabschnitt (in den Figuren nicht eingezeichnet, um die Zeichnungen nicht zu komplizieren) einer jeden Schlacht- und Einlegemaschine 11 (Fig.1) führen von dem gemeinsamen Förderer 28 Schurren 29 für die Zufuhr leerer Dosen. Die Abfuhrförderer 30 sämtlicher Schlacht- und Einlegemaschinen 11 sind über einen Sammelförderer 31 mit einer Anlage 32 für das Ablassen des Wassers aus den Dosen verbunden, die über Förderer 33, 34, 35, 36, 37, 38, 39 aufeinanderfolgend entsprechend mit einer Waage- und Kontrollanlage 40, einer Anlage 41 zur Berieselung der Fische mit Essiglösung, einer Anlage für die Wärmebehandlung der Fische 42, einer Spezereiendosiermaschine 43, dem Ölfüller 44, einer Dosenabschlußmaschine 45 und einer Dosenwaschmaschine 46 in Verbindung steht. Bei der Erzeugung der Konserven aus geräucherten Fischen, beispielsweise "Ölsprotten", wird zwischen der Waage- und Kontrollanlage 40 und der Anlage 41 zur Berieselung der Fische mit Essiglösung eine an sich bekannte Anlage zum Vortrocknen der Fischoberfläche eingebaut, die in den Figuren nicht eingezeichnet ist, um die Zeichnungen nicht zu komplizieren.

Die Anlage zur Berieselung der Fische mit Essiglösung kann in der Fließstraße auch fehlen, beispielsweise bei der Behandlung der Fische mit Essiglösung in einem besonderen Bad, das in der Straße vor den Schlacht- und Einlegemaschinen eingebaut ist.

In der Fließstraße können in der Fischkonservenproduktion gut bekannte Konstruktionen der Auftauanlagen, der Schlacht- und Einlegemaschinen, der Anlagen zum Ablassen des Wassers aus den Dosen, der Waage- und Kontrolleinrichtungen, der Anlage zur Berieselung der Fische mit Essiglösung, der Anlagen für die Wärmebehandlung der Fische, der Spezereiendosiermaschinen, der Ölfüller und der Dosen-Abschluß- und Waschmaschinen verwendet werden.

Die Fließstraße funktioniert wie folgt. Das Ausgangsmaterial, z.B. Strömlinge in Gefrierblöcken, durchlaufen zuerst die Auftauanlage I (Fig.1). Nach dem Auftauen werden die Fische über den Förderer 2 der Sortiermaschine 3 zugeführt, wo sie beispielsweise in fünf Größengruppen sortiert werden. Kleine Fische mit einer Länge unter 10,0 cm und große Fische mit einer Länge über 18,0 cm. die für die Erzeugung der Konserven vom Typ "Ölsprotten" bzw. "Ölsardinen" untauglich sind, werden aus der Sortiermaschine zu separaten Behältern abgeführt, die in den Figuren nicht eingezeichnet sind, um die Zeichnungen nicht zu komplizieren. Die restlichen Fische werden in der Sortiermaschine beispielsweise in drei Größengruppen aufgeteilt: erste Größengruppe - Fische mit einer Länge von 10 bis 14 cm, zweite Größengruppe - Fische mit einer Länge von 14 bis 16 cm und dritte Größengruppe - Fische mit einer Länge von 16 bis 18 cm. Die Fische der jeweiligen Größengruppe kommen über einer der Förderer 4, 5, 6 in die Pufferbehälter 7, die mit Höhenstandsgebern (in den Figuren nicht eingezeichnet, um die Zeichnungen nicht zu komplizieren) ausgestattet sind, die das Überfüllen der Pufferbehälter 7 mit Fischen durch Stillsetzen der vorgeschalteten Straßenabschnitten verhindern.

Falls eine der Größengruppen vorherrscht, können die Fische dieser Gruppe aus der Sortiermaschine 3 über einen Stromteiler (in den Figuren nicht eingezeichnet, um die Zeichnungen nicht zu komplizieren) in zwei bzw. mehrere Pufferbehälter 7 gegen werden. Aus den Pufferbehältern 7 werden die Fische mittels der Zubringerförderer 8 auf die Belade-bühnen 16 (Fig.2) der entsprechenden Scheiben-Fischorientierungsvorrichtungen 9 befördert, die unmittelbar unterhalb der Austrittsabschnitte 15 der Zubringerförderer 8 liegen. Auf jeder Fischorientierungsvorrichtung 9 werden zwei auseinanderlaufende Fischströme gebildet, in denen sich die Fische kopfwärts bewegen. Der erste der angeführten Fischströme wird über die Fischrinne 19 dem Eintrittsabschnitt 21 der Fischrinne 13 und der zweite Fischstrom über die Fischrinne 20 dem Eintrittsabschnitt 22 der Fischrinne 14 zugeführt. Da die Längen der Fischrinnen 19 und 20, d.h. die Weglängen, die die Fische auf den Fischorientierungsvorrichtungen 9 durchlaufen, sich nur wenig voneinander unterscheiden, sind auch die Fischmengen, die den Abschnitten 21 und 22 der Fischrinnen 13 und 14 zugeführt werden, praktisch einander gleich.

Auf den geneigten Fischrinnen 13 und 14 gleiten die kopfwärts orientierten Fische unter Einwirkung des Eigengewichts nach unten und kommen auf den technologischen Förderer 10. Hierbei wird in jede der Kassetten 12 zuerst der Fisch aus der Rinne 14 eingeführt, hiernach wird erforderlichenfalls von dem Operator eine Korrektur der Lage dieses Fisches von Hand durchgeführt, hiernach wird der Fisch aus der Fischrinne 13 in die Kassette eingeführt und derselbe operator führt von Hand auch die Korrektur der Lage dieses Fisches durch. Da die Fischrinnen 13, 14 an die gegenüberliedenden Bordseiten 25, 26 des technologischen Förderers 10 führen, sind die Fische, die aus den Fischrinnen 13 und 14 kommen, in entgegengesetzten Rischtungen orientiert.

Bei einer Vergrößerung bzw. Verminderung der Menge der Fische, die in die Kassetten 12 gegeben werden, wodurch ein unvollständiges Füllen bzw. Überfüllen der Kassetten 12 mit Fischen verursacht wird, vergrößert bzw. vermindert der Operator, der die Lage der Fische in den Kassetten berichtigt, entsprechenderweise mit Hilfe des Mittels 27 die Laufgeschwindigkeit des Zubringerförderers so weit, daß ein vollkommenes Füllen sämtlicher Kassetten mit der erforderlichen Fischmenge gewährleistet wird.

Auf dem technologischen Förderer 10 der Schlacht- und Einlegemaschine 11 werden nach dem Einlegen der Fische in die Kassetten 12 aufeinanderfolgende Arbeitsverrichtungen ausgeführt: Abtrennen der Köpfe und der Schwänze der Fische, Ausnehmen der Fische, Waschen der Fische und Umpacken der Fische aus den Kassetten 12 in die Dosen ( in den Figuren nicht eingezeichnet, um die Zeichnungen nicht zu komplizieren), die über die Schurren 29 (Fig.1) zugeführt werden. Die mit Fischen gefüllten Dosen gelangen über die Förderer 30 auf den Sammelförderer 31, wo sie zu einem Strom zusammengefaßt und zur Anlage für das Wasserablassen aus den Dosen befördert werden, wo aus den Dosen das in ihnen nach dem Waschen der Fische auf dem technologischen Förderer 10 zurückgebliebene Wasser abgelassen wird. Hierauf kommen die mit Fisch gefüllten Dosen über den Förderer 33 zur Waage- und Kontrollanlage 40, wo Dosen mit abnormalen Doseninhalt aussortiert werden. Nachdem die mit Fischen gefüllten Dosen die Waage- und Kontrollanlage 40 verlassen haben, werden auf entsprechenden Anlagen und Maschinen 41, 42, 43, 44, 45, 46 die anschließenden Behandlungen nach bekannten Technologien durchgeführt: Berieselung der Fische mit Essiglösung, Wärmebehandlung der Fische, dosierte Spezereienzuteilung, Öleinfüllen in die Dosen, Verschließen und Waschen der Dosen.

Bei der Herstellung Räuscherwarenkonserven der Typs "Rollmopsen" wird, nachdem die Dosen die Waage- und Kontrollanlage verlassen haben, die Fischoberfläche vorgetrocknet und die Berieselung der Fische wird mit einer Mischung aus Essiglösung und Räucherflüssigkeit durchgeführt.

Nach dem Waschen der verschlossenen Dosen werden letztere zur Sterilisation befördert.

Industrielle Anwendbarkeit

Am vorteilhaftesten kann die erfindungsgemäße Fließstraße zur Herstellung, von Konserven beispielsweise von "Ölsprotten" oder "Ölsardinen", aus kleinen Fischen zum Einsatz kommen, die in Dosen in zwei Reihen eingelegt werden.

EP 0 359 824 A1

PATENTANSPRÜCHE:

1. Fließstraße zur Erzeugung von Fischkonserven aus kleinen Fischen, die in rechteckige Dosen in zwei Reihe eingelegt sind, beispielsweise vom "Ölsprotten" bzw. "Ölsardinen", mit den aufeinanderfolgend in Richtung des technologischen Prozesses angeordneten: einer Fischsortiermaschine (3) zur Sortierung der Fische nach Größengruppen, einer Schlacht- und Einlegemaschine (11) mit einem ihr vorgeschalteten Pufferbehälter (7), die mit einem technologischen Förderer (10) mit Kassetten (12) für die Fische ausgerüstet ist, einer Waage- und Kontrollanlage (40), einer Anlage (42) für die Wärmebehandlung der Fische, einer Spezereiendosiermaschine (43), einem Ölfüller (44), einer Dosenabschlußmaschine (45) und einer Dosenwaschmaschine (46) dadurch g e k e n n z e i c h n e t , daß nach jedem Pufferbehälter (7) vor der Schlacht- und Einlegemaschine (11) eine an sich bekannte Scheiben- Fischorientierungsvorrichtung (9) angeordnet ist, daß der Pufferbehälter (7) mit der Fischorientierungsvorrichtung (9) über den Zubringerförderer (8) in Verbindung steht, dessen Ausgangsabschnitt (15) gegenüber der Längsachse (17) des technologischen Förderers (10) versetzt ist, daß jede Fischorientierungsvorrichtung (9) mit dem technologischen Förderer (10) über zwei geneigte Fischrinnen (13, 14) für die Beförderung der Fische in die Kassetten (12) in Verbindung steht, daß der Abstand auf dem Kreisumfang der Scheibe (18) einer jeden Fischorientierungsvorrichtung (9) von dem Austrittsabschnitt (15) des Zubringerförderers (8) bis zum Eintrittsabschnitt (21) einer der geneigten Fischrinnen (13) 0,9 bis 1,1 des Abstands von demselben Austrittsabschnitt (15) des Zubringerförderers (8) bis zum Eintrittsabschnitt (22) der anderen geneigten Fischrinne (14) beträgt, daß die Austrittsabschnitte (23, 24) der angeführten Fischrinnen zu den gegenüberliegenden Bordseiten (25, 26) des technologischen Förderers (10) führen und senkrecht in bezug auf seine Längsachse (17) orientiert sind, und daß der Eintrittsabschnitt (21) und der Austrittsabschnitt (23) der einen Fischrinne (13) gegenüber den entsprechenden Abschnitten (22, 24) der anderen Fischrinne (14) in der gleichen Richtung in Richtung der Längsachse (17) des technologischen Förderers (10) versetzt sind, wobei in der Fließstraße Mittel (27) zur Steuerung der Geschwindigkeit der Zubringerförderer (8) eingebaut sind.

2. Fließstraße nach Anspruch 1, dadurch g e k e n n - z e i c h n e t , daß die Mittel (27) zur Steuerung der Laufgeschwindigkeit der Zubringerförderer (8) an der Schlacht- und Einlegemaschinen (11) angeordnet sind.

FIG.1

FIG.2

# INTERNATIONAL SEARCH REPORT

International Application No PCT/SU 88/00073

## I. CLASSIFICATION OF SUBJECT MATTER (If several classification symbols apply, indicate all) [6]

According to International Patent Classification (IPC) or to both National Classification and IPC

IPC[4]    A23B 4/00, A22C 25/08

## II. FIELDS SEARCHED

### Minimum Documentation Searched [7]

| Classification System | Classification Symbols |
|---|---|
| IPC[4] | A23B 4/00, A22C 25/08 - 25/14 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | SU, A1, 226112 (A. Ya. Kashirsky) 10 January 1969( 10-01-69) see the claims | 1,2 |
| A | SU, A1, 1147325 (Opytnoe proizvadstvenno-tekhnicheskoe obiedinenie "Tekhrybprom") 30 March 1985 (30.03.85) see column 2,lines 5-20,figure 2 | 1,2 |
| A | Express-informatsiya "Tekhnologicheskoe oborudavanie rybnoi promyshlennosti" Seriya 4, 1975, vypusk 7, M.M. Piletsky "Problemy komplexnoi mekhanizatsii proizvedstva konservov iz sardiny" pages 1,2;figure 1 | 1,2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 16 December 1988 (16.12.88) | 28 December 1988 (28.12.88) |

| International Searching Authority | Signature of Authorized Officer |
|---|---|
| ISA/SU | |

Form PCT/ISA/210 (second sheet) (January 1985)